Europäisches Patentamt

European Patent Office

Office européen des brevets

(11) Veröffentlichungsnummer: **0 258 465**
**A1**

(19)

(12) **EUROPÄISCHE PATENTANMELDUNG**

(21) Anmeldenummer: 86111026.0

(22) Anmeldetag: 09.08.86

(51) Int. Cl.⁴: **B01D 53/36** , B01J 21/16 , B01J 29/02

(43) Veröffentlichungstag der Anmeldung:
09.03.88 Patentblatt 88/10

(84) Benannte Vertragsstaaten:
AT BE CH DE FR GB LI LU NL SE

(71) Anmelder: SÜD-CHEMIE AG
Lenbachplatz 6
D-8000 München 2(DE)

(72) Erfinder: Schneider Michael, Dr.
Waldparkstrasse 54a
D-8012 Ottobrunn-Riemerling(DE)
Erfinder: Kochloefl, Karl, Dr.
Justus-von-Liebig-Strasse 3
D-8206 Bruckmühl/Heufeld(DE)
Erfinder: Maletz, Gerd, Dr.
Innere Regensburgerstrasse 9a
D-8300 Landshut(DE)
Erfinder: Wernicke, Hans Jürgen, Dr.
Böhmerwaldstrasse 37g
D-8192 Geretsried(DE)

(74) Vertreter: Reitzner, Bruno, Dr.
Patentanwälte Dipl.-Ing. R. Splanemann Dr.
B. Reitzner Tal 13
D-8000 München 2(DE)

(54) **Katalysator zur Verringerung des Stickoxidgehalts von Verbrennungsabgasen.**

(57) Ein Katalysator zur Verringerung des Stickoxidgehalts von Verbrennungsabgasen enthält mindestens eines der Metalle Ti, Zr, V, W, Mo oder Ce in Form eines oder mehrerer ihrer Oxide, in Kombination mit einem Silikat mit Dreischichtstruktur (Dreischichtsilikat); er ist durch folgende Merkmale gekennzeichnet:

a) das Dreischichtsilikat ist ein Illit oder Glimmer;

b) das Atomverhältnis zwischen dem im Illit oder Glimmer enthaltenen Silicium und dem (den) in dem (den) Oxid(en) enthaltenen Metall(en) beträgt 0,2 bis 50, vorzugsweise 0,4 bis 25.

EP 0 258 465 A1

## Katalysator zur Verringerung des Stickoxidgehalts von Verbrennungsabgasen

Die Erfindung betrifft einen Katalysator zur Verringerung des Stickoxidgehalts von Verbrennungsabgasen.

Bei der Verbrennung fossiler Brennstoffe werden sowohl aus stickstoffhaltigen Komponenten als auch aus dem Luftstickstoff Stickoxide ($NO_x$) gebildet, welche in die Atmosphäre gelangen und eine ernste Umweltbeeinträchtigung darstellen.

Es ist bekannt, daß Stickoxide durch $NH_3$ in $N_2$ und $H_2O$ überführt werden können und daß diese Reaktion in einem weiten Temperaturbereich ziemlich selektiv ist, d.h. in Gegenwart eines hohen Sauerstoffüberschusses (wie er in Verbrennungsabgasen gewöhnlich vorhanden ist) ohne allzu hohe Ammoniakverluste infolge Oxidation abläuft, so daß nur relativ geringe Mengen an Reduktionsmittel erforderlich sind. Es sind weiterhin bereits verschiedene Katalysatoren für die $NO_x$-Reduktion mittels Ammoniak bekannt.

So ist z.B. aus der DE-AS 24 10 175 ein derartiger Katalysator aus Oxiden des Vanadiums, Molybdäns und/oder Wolframs der Stöchiometrie $V_{12-x-y}MO_xW_y$ bekannt, wobei x und y durch die Beziehungen $0 \leq x \leq 8$, $0 \leq y \leq 5$ und $0,3 \leq (x + y) \leq 8$ festgelegt sind.

Es ist weiterhin aus der DE-PS 24 58 888 ein Verfahren zur reduktiven Zerstörung von Stickoxiden in Abgasen bekannt, bei dem ein Stickoxide, molekularen Sauerstoff und Ammoniak enthaltendes Gasgemisch mit einer Katalysatorzusammensetzung in Berührung gebracht wird, die als wesentliche Bestandteile (A) Titan in Form von Oxiden in einem innigen Gemisch mit (B) Eisen oder Vanadium in Form von Oxiden enthält.

Diese Katalysatoren haben den Nachteil, daß die als katalytisch aktive Komponenten enthaltenen relativ teuren Übergangsmetallverbindungen nur zu einem geringen Grad ausgenutzt werden, da ihre Verteilung nicht optimal ist. Es ist zwar vorgesehen, die Aktivkomponente durch inerte, feste Träger zu strecken, wodurch die Wirtschaftlichkeit zweifellos verbessert wird, doch besteht bei einer Verdünnung mit inertem Material die Gefahr, daß die katalytische Aktivität stark vermindert wird. Diese Katalysatoren haben den Nachteil, daß sie auch das im Rauchgas häufig enthaltene $SO_2$ zu $SO_3$ oxidieren, was zum Beispiel zu Salzablagerungen in nachgeschalteten Anlageteilen führen kann.

Ferner ist aus der DE-OS 34 38 367 ein Katalysator zur Verringerung des Stickoxidgehalts von Verbrennungsabgasen durch selektive Reduktion bekannt, der aus (A) 80 bis 95 Gew.-% eines schwefeloxidhaltigen katalytischen Oxids, das u.a. durch thermische Behandlung einer wäßrigen Oxidverbindung des Titans oder des Siliciums erhältlich ist, (B) 0 bis 5 Gew.-% eines Vanadiumoxid enthaltenden katalytischen Oxids und (C) 1 bis 15 Gew.-% eines katalytischen Oxids, z.B. des Wolframs, besteht.

Als wesentlich für diesen Katalysator wird die Bildung einer aus $SiO_2$ und $TiO_2$ zusammengesetzten Feststoffsäure angesehen, deren Acidität durch die Behandlung mit Schwefelsäure oder Ammoniumsulfat modifiziert wird. Man betrachtet die Feststoffsäureverteilung als maßgeblich für die Steuerung der $NH_3$-Adsorption an der Katalysatoroberfläche und damit für die Verbesserung der katalytischen Aktivität.

$SiO_2$ wird dabei in Form von Kieselsol eingesetzt. Bekanntlich erhält man aus $SiO_2$-Solen Kieselgele, welche sich durch hohe BET-Oberflächen bei gleichzeitig hoher Porosität auszeichnen, wobei aber der Makroporenanteil gering ist, was negative Auswirkungen auf den Stofftransport und damit auf die katalytische Wirksamkeit hat.

Schließlich ist aus der DE-OS 27 48 471 eine Katalysatormasse zur Anwendung bei der Dampfphasenreduktion von Stickoxiden mit Ammoniak, insbesondere zur Verringerung des Stickoxidgehalts von Verbrennungsabgasen, bekannt, die im wesentlichen aus einem Oxid oder Sulfat eines der Metalle Kupfer, Vanadium, Chrom, Molybdän, Wolfram, Mangan, Eisen oder Cer auf einem geformten Träger, der Titanoxid und ein Tonmineral mit einer durchschnittlichen Teilchengröße von 0,1 bis 100 $\mu$m enthält, besteht. Es können auch gewisse Tonmineralien mit Dreischichtstruktur (Dreischichtsilikate) in Mengen von bis zu 15 Gew.-% verwendet werden; hierdurch soll lediglich eine Erhöhung der Festigkeit der Katalysatoren bezweckt werden. Bezüglich der katalytischen Wirksamkeit spielen sie in den angegebenen Mengen keine Rolle. In größeren Mengen wirken sie sich in dieser Hinsicht sogar negativ aus; außerdem vermindern sie die Beständigkeit des Katalysators gegenüber $SO_x$-haltigen Abgasen.

Es wurde nun gefunden, daß durch Verwendung von Illit oder Glimmer, der mit weiteren oxidischen Katalysatorkomponenten in synergetische Wechselwirkungen tritt, Katalysatoren der vorstehend angegebenen Gattung erhalten werden können, deren Aktivität verbessert ist und mit deren Hilfe der Stickoxidgehalt von Verbrennungsabgasen bei gleichzeitiger besonders wirtschaftlicher Ausnutzung der teuren oxidischen Katalysatorkomponenten sowie des Reduktionsmittels weitgehend entfernt werden kann. Ferner haben diese Katalysatoren trotz ihres verhältnismäßig hohen Alkaligehalts eine hohe $SO_x$-Beständigkeit erreicht. Illit und Glimmer gehören in die Gruppe der Dreischichtsilikate.

Gegenstand der Erfindung ist somit ein Katalysator zur Verringerung des Stickoxidgehalts von Verbrennungsabgasen, enthaltend mindestens eines der Metalle Ti, Zr, V, W, Mo oder Ce in Form eines oder mehrerer ihrer Oxide, in Kombination mit einem Silikat mit Dreischichtstruktur (Dreischichtsilikat).

Dieser Katalysator ist durch folgende Merkmale gekennzeichnet:

a) das Dreischichtsilikat ist ein Illit oder Glimmer;

b) das Atomverhältnis zwischen dem im Illit oder Glimmer enthaltenen Silicium und dem (den) in dem (den) Oxid(en) enthaltenen Metall(en) beträgt 0,2 bis 50, vorzugsweise 0,4 bis 25.

Obwohl der Illit oder Glimmer nicht besonders behandelt wird, findet offenbar eine synergetische Wechselwirkung mit den Metalloxiden statt.

Der Grund hierfür ist zwar im einzelnen noch nicht geklärt, kann jedoch auf die besonders günstige kristalline Struktur des Illits oder Glimmers zurückgeführt werden.

Die erfindungsgemäßen Katalysatoren zeichnen sich auch durch eine hohe Beständigkeit gegenüber Schwefeloxiden bzw. Schwefelsäure aus, obwohl ihr Alkaligehalt nicht durch eine Säurebehandlung des Illits oder Glimmers herabgesetzt wurde.

Als Ausgangsverbindungen für die Metalloxid-Komponente des erfindungsgemäßen Katalysators verwendet man einmal die entsprechenden Metalloxide und zum anderen die in die Metalloxide überführbaren Substanzen, z.B. die Metalle, die Hydroxide und insbesondere die Salze, Komplexverbindungen und/oder die Sauerstoffsäuren bzw. die von diesen Säuren abgeleiteten Salze. Diese können gegebenenfalls zusammen mit einem als Reduktionsmittel und/oder Komplexbildner wirkenden Zusatz verwendet werden.

Cer kann z.B. ausgehend von $Ce_2O_3$, $CeO_2$, $Ce(SO_4)_2$ und $Ce_2(C_2O_4)_3$ eingesetzt werden. Geeignete Ausgangsstoffe für Zirkonoxid sind neben den Oxidhydraten z.B. die Zirkon-und Zirkonylsalze, wie $Zr(SO_4)$-$_2H$, $ZrCl_4$, $ZrOCl_2$ und $Zr(C_2O_4)_2$.

Als Ausgangssubstanzen für die Wolframkomponente eignen sich z.B. Wolframoxide, wie $WO_3$, $W_{10}O_{29}$, $W_4O_{11}$, $WO_2$, Mono-und Polywolframsäuren, Heteropolysäuren, Wolframate, Wolframhalagonide und -oxyhalogenide. Statt der genannten Wolframverbindungen können auch entsprechende Molybdänverbindungen eingesetzt werden. Im Falle des Vanadiums stellen u.a. $V_2O_5$, $VO_2$, $V_2O_3$ und $VO$ geeignete Ausgangsverbindungen dar, sowie Ortho-und Polyvanadinsäure, bzw. -vanadate, Vanadiumhalogenide und -oxyxhalogenide, wie z.B. $VOCl_3$, verschiedene Vanadium-bzw. Vanadylsalze.

Geeignete Titanverbindungen sind neben den Oxiden und Oxidhydraten die Titan-oder Titanylsalze, insbesondere die Halogenide und die Sulfate. Vorzugsweise wird Titanylsulfat verwendet. Es können auch metallorganische Verbindungen verwendet werden, z.B. Ester der Titansäure, wie Isopropyltitanat.

Es wurde gefunden, daß besonders vorteilhafte Ergebnisse erzielt werden, wenn die Metalloxide einzeln in folgenden Konzentrationsbereichen vorliegen:

$TiO_2$ = 10 - 80 Gew.-%

$WO_3$ und/oder $MoO_3$ = 1 - 25 Gew.-%

$V_2O_5$ = 0,1 - 25 Gew.-%

$CeO_2$ = 1 - 25 Gew.-%

wobei der Illit oder Glimmer den Rest der wirksamen Komponente darstellt.

Bei den bevorzugten Katalysatoren liegen die Metalloxide in Zweierkombinationen, insbesondere aber in Dreierkombinationen vor.

In den Dreierkombinationen liegen die Metalloxide in folgenden bevorzugten Mengenanteilen vor:

(a) ($TiO_2$ + $WO_3$ und/oder $MoO_3$ + $V_2O_5$) = 10 - 80 Gew.-%

(b) ($TiO_2$ + $CeO_2$ + $V_2O_5$) = 10 - 80 Gew.-%

(c) ($TiO_2$ + $ZrO_2$ + $V_2O_5$) = 10 - 80 Gew.-%

(d) ($WO_3$ und/oder $MoO_3$ + $CeO_2$ + $V_2O_5$) = 10 - 25 Gew.-%

(e) ($WO_3$ und/oder $MoO_3$ + $ZrO_2$ + $V_2O_5$) = 10 - 25 Gew.-% wobei der Illit oder Glimmer jeweils den Rest der wirksamen Komponente darstellt.

Das Gewichtsverhältnis zwischen den Metalloxiden der Dreierkombination umfaßt vorzugsweise jeweils folgende Bereiche:

(a) $WO_3$ und/oder $MoO_3/TiO_2$ = 0,01 - 0,25

$V_2O_5/TiO_2$ = 0,01 - 0,11

(b) $CeO_2/TiO_2$ = 0,05 - 0,23

$V_2O_5/TiO_2$ = 0,01 - 0,11

(c) $ZrO_2/TiO_2$ = 0,01 - 0,24

$V_2O_5/TiO_2$ = 0,01 - 0,11

(d) $CeO_2/WO_3$ und/oder $MoO_3$ = 0,1 - 5,0

$V_2O_5/WO_3$ und/oder $MoO_3$ = 0,1 - 2,5

(e) $V_2O_5/WO_3$ und/oder $MoO_3 = 0,1 - 2,5$

$ZrO_2/WO_3$ und/oder $MoO_3 = 0,1 - 10$

Die erfindungsgemäßen Katalysatoren sind beispielsweise durch Tränken des Illits oder Glimmers mit einer Lösung, die eines oder mehrere der genannten Metalle in Form von Salzen und/oder Komplexverbindungen enthält, und anschließendes Calcinieren erhältlich.

Nach einer anderen Variante kann der Katalysator dadurch erhalten werden, daß der Illit oder Glimmer mit einem Oxid oder Salz eines oder mehrerer der geannnten Metalle mechanisch vermischt wird (z.B. durch Vermahlen in einer Kugelmühle); anschließend wird das Gemisch gegebenenfalls mit einer Lösung getränkt, die eines oder mehrere der genannten Metalle in Form von Salzen und/oder Komplexverbindungen enthält, worauf eine Calcinierung erfolgt.

Ferner können die erfindungsgemäßen Katalysatoren durch Aus-oder Umfällen mindestens einer Verbindung, die eines oder mehrere der genannten Metalle enthält, in Gegenwart einer Suspension des Illits oder Glimmers, Auswaschen der Fremdionen und anschließendes Calcinieren erhalten werden.

Die Aus-oder Umfällung der Verbindun(en), die eines oder mehrere der genannten Metalle enthält (enthalten), kann auch in Gegenwart einer Mischsuspension des Illits oder Glimmers und eines Oxids oder Salzes einer oder mehrerer der genannten Metalle erfolgen. Nach dem Auswaschen der Fremdionen erfolgt wieder eine Calcinierung.

Auf diese Weise erreicht man eine nahezu optimale innige Mischung der oxidischen Metallkomponenten mit dem Illit oder Glimmer.

Besteht die oxidische Metallkomponente aus mehreren Metalloxiden, so können die jeweiligen Ausgangsverbindungen entweder gemeinsam oder in mehreren Arbeitsgängen nacheinander gefällt werden, wobei die Reihenfolge der Fällungsschritte in der Regel die katalytische Aktivität beeinflußt und im Einzelfall optimiert werden muß. Es kann sich allerdings auch als zweckmäßig erweisen, den Illit oder Glimmer, gegebenenfalls nach einem oder mehreren Fällungsschritten, mit der Lösung einer entsprechenden Übergangsverbindung zu imprägnieren. Die Imprägnierung kann dabei sowohl vor als auch nach der Formgebung und der Calcinierung des Katalysators erfolgen.

Der erfindungsgemäße Katalysator kann auch ein inertes Trägermaterial enthalten. Der Katalysator liegt üblicherweise als Formkörper vor, insbesondere in Form von Kugeln, Tabletten, Strangpreßlingen, langgestreckten oder flachen Wabenkörpern (letztere werden als "Kanalgitter" bezeichnet), Stäben, Rohren, Platten, Ringen, Wagenrädern oder Sattelkörpern.

Diese Formkörper können z.B. durch Tablettieren oder Strangpressen der Katalysatormasse erhalten werden, wobei gegebenenfalls Zusätze, die die Formbarkeit verbessern, beigemischt werden können. Derartige Zusätze sind beispielsweise Graphit oder Aluminiumstearat. Es können auch Zusätze, die die Oberflächenstruktur verbessern, beigemsicht werden. Hierbei handelt es sich z.B. um organische Substanzen, die bei der anschließenden Calcinierung unter Zurücklassung einer porösen Struktur verbrennen.

Zusätze, die die Verformbarkeit verbessern, können neutrale Bentonite oder andere Bindemittel, wie Kaolin oder Zemente, zugesetzt werden. Die Formgebung erfolgt im allgemeinen unter Zusatz von Wasser oder organischen Lösungsmitteln, z.B. von ein-oder mehrwertigen Alkoholen.

Die erfindungsgemäßen Katalysatoren werden in der Regel nach erfolgter Formgebung getrocknet und bei Temperaturen von etwa 200 bis 700° C, vorzugsweise von 300 bis 550° C, calciniert. Zur Festigkeitserhöhung können außerdem anorganische faserartige Materialien vor der Verformung zugesetzt werden. Durch die Calcinierung wird der Katalysator aktiviert und erreicht auf diese Weise seine vorteilhaften Eigenschaften, insbesondere wenn die vorstehend angegebenen Temperaturbereiche eingehalten werden.

Typische Arbeitsweisen bei der Herstellung der erfindungsgemäßen Katalysatoren sind in den Beispielen beschrieben.

Gegenstand der Erfindung ist auch die Anwendung der erfindungsgemäßen Katalysatoren zur reduktiven Verringerung des Stickoxidgehalts von Verbrennungsabgasen, welche neben den üblichen Abgasbestandteilen auch Schwefeloxide ($SO_x$) enthalten, wobei als Reduktionsmittel $NH_3$ verwendet wird.

Bei der Reduktion mit $NH_3$ wird der Stickoxidgehalt der Verbrennungsabgase dadurch verringert, daß sich $N_2$ und $H_2O$ bilden. Als Stickoxide ($NO_x$) werden die verschiedenen Sauerstoffverbindungen des Stickstoffs bezeichnet, wie z.B. $NO$, $N_2O_3$, $NO_2$, $N_2O_5$; es handelt sich jedoch vorwiegend um $NO$ und $NO_2$, wobei $NO$ überwiegt.

Die $NO_x$-Konzentration der zu reinigenden Abgase kann in weiten Grenzen variieren; sie liegt im allgemeinen im Bereich von 100 Vol-ppm bis 5 Vol.-%. Das molare Verhältnis $NH_3:NO_x$ beträgt im allgemeinen 0,3 bis 3, vorzugsweise 0,6 bis 1,5, und kann durch regelungstechnische Maßnahmen in der Weise eingestellt werden, daß maximale $NO_x$-Umsätze bei möglichst niedrigem $NH_3$-Schlupf erzielt werden. Das $NH_3$ kann sowohl gasförmig als auch in Form einer wäßrigen Lösung eindosiert werden.

Die erfindungsgemäßen Katalysatoren zeichnen sich gegenüber bekannten Katalysatoren durch eine sehr weitgehende selektive Umsetzung des für die Reduktion der Stickoxide bevorzugt verwendeten Ammoniaks aus. Bei bekannten Verfahren wird, insbesondere bei höheren Betriebstemperaturen, ein beträchtlicher Teil des Ammoniaks nicht zur gewünschten $NO_x$-Entfernung verbraucht, sondern selbst durch den im Abgas vorhandenen Sauerstoff oxidiert. Dies führt zu einer zusätzlichen Stickstoffbildung bzw. vermindert den zwischen Reaktoreintritt und -austritt beobachteten $NO_x$-Umsatz und führt zu unnötigem $NH_3$-Verbrauch.

Für die Entstickungsreaktion eignen sich prinzipiell sämtliche üblicherweise für heterogen katalysierte Gasphasenreaktionen verwendete Reaktoren, sofern die Konstruktionsmerkmale des Reaktors den Durchsatz entsprechend hoher Rauchgasvolumenströme gestatten. Zulässige Raumgeschwindigkeiten (RG) liegen im Bereich von 500 bis 20 000, vorzugsweise zwischen 1000 und 15 000 Liter Gas je h und Liter Katalysator, wobei diese Raumgeschwindigkeiten sich auf ein Gas bei 0°C und 1 bar beziehen. Die Raumgeschwindigkeit wird nachstehend der Einfachheit halber mit der Dimension $h^{-1}$ bezeichnet. Geeignete Reaktionstemperaturen liegen im Bereich von etwa 200 bis 600° C, vorzugsweise von 250 bis 430° C. Bei erheblich höheren Temperaturen kann eine Oxidation des Ammoniaks durch den im Abgas enthaltenen Sauerstoff stattfinden, wodurch der Ammoniak der Reaktion mit den Stickoxiden entzogen wird, so daß der Entstickungsgrad sinken kann. Dieser nachteilige Effekt ist jedoch bei den erfindungsgemäßen Katalysatoren nicht so stark wie bei bekannten Katalysatoren.

Im folgenden werden typische Beispiele für die Herstellung und Anwendung der erfindungsgemäßen Katalysatoren aufgeführt.

Die Wirksamkeit der Katalysatoren hinsichtlich der Beseitigung von Stickstoffoxiden aus Gasgemischen, welche u.a. auch Sauerstoff und Schwefeloxide enthalten, wird festgestellt durch Kontaktieren des Katalysators mit einem Gasstrom, welcher durch ein diesen Katalysator als Schüttgut enthaltendes, von außen elektrisch beheiztes Rohr geleitet wird. Das verwendete Gasgemisch hat folgende Zusammensetzung:

$O_2$ 3 Vol.-%
$H_2O$ 10 Vol.-%
NO 750 Vol-ppm
$NO_2$ 50 Vol-ppm
$NH_3$ 800 Vol-ppm
$SO_2$ 950 Vol-ppm
$SO_3$ 50 Vol-ppm
$N_2$ Differenz bezüglich 100 Vol-%.

Die Konzentration der Komponenten NO und $NO_2$ im Gasgemisch wurde vor und nach dem Passieren der Katalysatorschüttgutschicht durch einen geeichten Analysator (Chemolumineszenzverfahren) kontinuierlich gemessen. Als Maß für die Wirksamkeit der Katalysatoren bezüglich der Reduktion der Stickoxide dient die Angabe der $NO_x$-Umsatzgrade nach Einstellung des stationären Zustandes, definiert durch die folgenden Beziehungen:

$$NO_x\text{-Umsatz} \ (U_{NO_x}) \ = \ \frac{C^E_{NO_x} - C^A_{NO_x}}{C^E_{NO_x}} \cdot 100 \ (\%)$$

Dabei bezeichnet das Symbol $C_{NO_x}$ die Konzentrationen von NO plus $NO_2$, wobei sich die Superskripte E und A auf den Zustand des Gasgemisches vor bzw. nach Passieren des Katalysators beziehen.

## Beispiel 1

In eine Suspension von 400 g dioktaedrischem Illit mit einer BET-Oberfläche von 41 m²/g und der in Tabelle I angegebenen chemischen Zusammensetzung trägt man unter Rühren 180 g Titanylsulfat ($TiOSO_4$) ein, neutralisiert mit Ammoniak und saugt ab. Der Feststoff wird sulfatfrei gewaschen, 15 Stunden bei 120° C getrocknet und mit der durch Reduktion von 1,3 g Ammoniummetavanadat mit 1,6-fachem Überschuß Oxalsäuredihydrat erhaltenen Lösung unter Zusatz einer Lösung von 10,5 g Ammoniummetawolframat in $H_2O$ verknetet. Die Lösungsmittelmengen werden so gewählt, daß leicht knetbare, pastöse Massen entstehen. Die getrocknete Masse wird zu Formkörpern verpreßt, die 5 h bei 500°C calciniert werden.

## Beispiel 2

400 g Kaliglimmer (Muskovit) werden durch Vermahlen auf eine durchschnittliche Teilchengröße von 40 μm gebracht. Die chemische Zusammensetzung ist in Tabelle I angegeben.

Das zerkleinerte Material wird, wie in Beispiel 1 angegeben, mit Titanylsulfat, Ammoniummetawolframat und Ammoniummetavanadat belegt. Die getrocknete Masse wird zu Formkörpern verpreßt, die 5 h bei 500°C calciniert werden.

Die Zusammensetzung der Katalysatoren, die Reaktionstemperaturen und die $NO_x$-Umsätze bei einer Raumgeschwindigkeit von 6400 $h^{-1}$ sind in Tabelle II angegeben. Für die Durchführung der Reaktionen wurde das vorstehend angegebene Gasgemisch verwendet; die $NO_x$-Umsätze wurden nach der vorstehend angegebenen Formel berechnet.

Tabelle I: Zusammensetzung der Silikate

| Silikat | SiO$_2$ (%) | Al$_2$O$_3$ (%) | Fe$_2$O$_3$ (%) | CaO (%) | MgO (%) | Na$_2$O (%) | K$_2$O (%) | Glühverlust (%) |
|---|---|---|---|---|---|---|---|---|
| Illit (Beispiel 1) | 56,0 | 17,0 | 9,2 | 0,3 | 3,3 | 0,1 | 6,7 | 6,4 |
| Glimmer (Beispiel 2) | 49,1 | 28,9 | 3,8 | 0,1 | 1,4 | 1,7 | 9,3 | 4,1 |

## Tabelle II

### Zusammensetzung der Katalysatoren und $NO_x$-Umsätze

| Beispiel | Zusammensetzung (%) | T (°C) | $U_{NO}$ (%) |
|---|---|---|---|
| 1 | $V_2O_5$ (0,2) $WO_3$ (1,8) $TiO_2$ (18) Illit (80) | 250 300 350 400 | n.b. 67 63 43 |
| 2 | $V_2O_5$ (0,2) $WO_3$ (1,8) $TiO_2$ (18) Glimmer (80) | 250 300 350 400 | 89 91 89 79 |

**Ansprüche**

1. Katalysator zur Verringerung des Stickoxidgehalts von Verbrennungsabgasen, enthaltend mindestens eines der Metalle Ti, Zr, V, W, Mo oder Ce in Form eines oder mehrerer ihrer Oxide, in Kombination mit einem Silikat mit Dreischichtstruktur (Dreischichtsilikat), gekennzeichnet durch folgende Merkmale:

a) das Dreischichtsilikat ist ein Illit oder Glimmer;

b) das Atomverhältnis zwischen dem im Illit oder Glimmer enthaltenen Silicium und dem (den) in dem (den) Oxid(en) enthaltenen Metall(en) beträgt 0,2 bis 50, vorzugsweise 0,4 bis 25.

2. Katalysator nach Anspruch 1, dadurch gekennzeichnet, daß die Metalloxide einzeln in folgenden Konzentrationsbereichen vorliegen:

$TiO_2$ = 10 - 80 Gew.-%

$WO_3$ und/oder $MoO_3$ = 1 - 25 Gew.-%

$V_2O_5$ = 0,1 - 25 Gew.-%

$CeO_2$ = 1 - 25 Gew.-%

wobei der Illit oder Glimmer den Rest der wirksamen Komponente darstellt.

3. Katalysator nach Anspruch 1 oder 2, dadurch gekennzeichnet, daß die Metalloxide in einer der folgenden Dreierkombinationen vorliegen:

(a) $(TiO_2 + WO_3 +$ und/oder $MoO_3 + V_2O_5)$ = 10 - 80 Gew.-%

(b) $(TiO_2 + CeO_2 + V_2O_5)$ = 10 - 80 Gew.-%

(c) $(TiO_2 + ZrO_2 + V_2O_5)$ = 10 - 80 Gew.-%

(d) $(WO_3$ und/oder $MoO_3 + CeO_2 + V_2O_5)$ = 10 - 25 Gew.-%

(e) $(WO_3$ und/oder $MoO_3 + ZrO_2 + V_2O_5)$ = 10 - 25 Gew.-%

wobei der Illit oder Glimmer jeweils den Rest der wirksamen Komponente darstellt.

4. Katalysator nach Anspruch 3, dadurch gekennzeichnet, daß das Gewichtsverhältnis zwischen den Metalloxiden der Dreierkombination jeweils folgende Bereiche umfaßt:

(a) $WO_3$ und/oder $MoO_3/TiO_2$ = 0,01 - 0,25

$V_2O_5/TiO_2$ = 0,01 - 0,11

(b) $CeO_2/TiO_2 = 0,05 - 0,23$
$V_2O_5/TiO_2 = 0,01 - 0,11$
(c) $ZrO_2/TiO_2 = 0,01 - 0,24$
$V_2O_5/TiO_2 = 0,01 - 0,11$
(d) $CeO_2/WO_3$ und/oder $MoO_3 = 0,1 - 5,0$
$V_2O_5/WO_3$ und/oder $MoO_3 = 0,1 - 2,5$
(e) $V_2O_5/WO_3$ und/oder $MoO_3 = 0,1 - 2,5$
$ZrO_2/WO_3$ und/oder $MoO_3 = 0,1 - 10$

5. Katalysator nach einem der Ansprüche 1 bis 4, dadurch gekennzeichnet, daß er als Formkörper, insbesondere in Form von Kugeln, Tabletten, Strangpreßlingen, langgestreckten oder flachen Wabenkörpern, Platten, Stäben, Rohren, Ringen, Wagenrädern oder Sattelkörpern vorliegt.

6. Katalysator nach einem der Ansprüche 1 bis 5, dadurch gekennzeichnet, daß er durch Tränken des Illits oder Glimmers mit einer Lösung, die eines oder mehrere der genannten Metalle in Form von Salzen und/oder Komplexverbindungen enthält, und anschließendes Calcinieren erhältlich ist.

7. Katalysator nach einem der Ansprüche 1 bis 5, dadurch gekennzeichnet, daß er durch mechanisches Vermischen des Illits oder Glimmers mit einem Oxid oder Salz eines oder mehrerer der genannten Metalle, anschließendes Tränken mit einer Lösung, die eines oder mehrere der genannten Metalle in Form von Salzen und/oder Komplexverbindungen enthält, und anschließendes Calcinieren erhältlich ist.

8. Katalysator nach einem der Ansprüche 1 bis 5, dadurch gekennzeichnet, daß er durch Aus-oder Umfällen mindestens einer Verbindung, die eines oder mehrere der genannten Metalle enthält, in Gegenwart einer Suspension des Illits oder Glimmers, Auswaschen der Fremdionen und anschließendes Calcinieren erhältlich ist.

9. Katalysator nach einem der Ansprüche 1 bis 5, dadurch gekennzeichnet, daß er durch Aus-oder Umfällen mindestens einer Verbindung, die eines oder mehrere der genannten Metalle enthält, in Gegenwart einer Mischsuspension des Illits oder Glimmers und eines Oxids oder Salzes einer oder mehrerer der genannten Metalle, Auswaschen der Fremdionen und anschließendes Calcinieren erhältlich ist.

10. Anwendung des Katalysators nach einem der Ansprüche 1 bis 9, zur reduktiven Verringerung des Stickoxidgehalts von Verbrennungsabgasen, welche neben den üblichen Abgasbestandteilen auch Schwefeloxide enthalten, wobei als Reduktionsmittel $NH_3$ verwendet wird.

11. Anwendung nach Anspruch 10, im Temperaturbereich von 250 bis 600°C, vorzugsweise von 250 bis 430°C, und bei einer Raumgeschwindigkeit im Bereich von 500 bis 20 000 Liter Verbrennungsabgase je Stunde und Liter Katalysator.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 617 744 (HITACHI-BABCOCK) * Seite 8, letzter Absatz; Seite 13, Absätze 2,3; Beispiele 1-3; Ansprüche 1,4 * | 1-4,10 ,11 | B 01 D 53/36 B 01 J 21/16 B 01 J 29/02 |
| | --- | | |
| A | EP-A-0 092 858 (SHELL) * Ansprüche; Seite 3, Zeile 28 - Seite 4, Zeile 8 * | 1,6 | |
| | --- | | |
| A | DE-C- 814 293 (BASF) | | |
| | ----- | | |

RECHERCHIERTE SACHGEBIETE (Int. Cl.4)

B 01 D 53/00
B 01 J 21/00
B 01 J 29/00

Der vorliegende Recherchenbericht wurde für alle Patentansprüche erstellt.

| Recherchenort | Abschlußdatum der Recherche | Prüfer |
|---|---|---|
| DEN HAAG | 29-10-1986 | BOGAERTS M.L.M. |